# EUROPEAN PATENT SPECIFICATION

(11) **EP 2 141 618 B1**
(45) Date of publication and mention of the grant of the patent: **26.10.2016**
(21) Application number: 08425457.2
(22) Date of filing: 27.06.2008
(51) Int. Cl.: B60R 16/02, G06F 17/50

(54) **Checking interaction/interference of a flexible body with interfacing bodies during its utilization**
Überprüfung der Interaktion/Interferenz eines flexiblen Körpers mit Kopplungskörpern während seiner Verwendung
Vérification de l'interaction/interférence d'un corps flexible avec des corps d'interface pendant son utilisation

(43) Date of publication of application: 06.01.2010
(60) Divisional application: 12186901.0
(73) Proprietor: Fiat Group Automobiles S.p.A., 10135 Torino (TO) (IT)
(72) Inventor: Babbone, Carmine, 80038 Pomigliano (IT); Esposito, Gennaro, 10135 Torino (IT); Calamida, Alessandro, 10135 Torino (IT)
(74) Representative: Bergadano, Mirko

(56) References cited:
- GB-A- 2 265 261
- GB-A- 2 408 115
- US-A1- 2005 240 383
- LEON J-C ET AL: "Modelling flexible parts for virtual reality assembly simulations which interact with their environment" SHAPE MODELING AND APPLICATIONS, SMI 2001 INTERNATIONAL CONFERENCE ON. MAY 7-11, 2001, PISCATAWAY, NJ, USA,IEEE, 7 May 2001 (2001-05-07), pages 335-344, XP010541348 ISBN: 978-0-7695-0853-5

## Description

The present invention broadly concerns checking the interaction/interference of a flexible body with interface bodies during its utilization. In particular, the present invention finds advantageous, but not exclusive, application in the automotive field for checking the interaction or interference of a flexible hose, through which an operating fluid passes during use, with components present close by to the flexible hose and by which the latter is constrained or simply operationally adjacent to.

For descriptive convenience, but without any loss in generality, the description that follows shall refer to a flexible hose of a motor vehicle braking system, the flexible hose being, in use, flowed through by a fluid, typically oil, which operates the braking members.

As is known, in the automotive field, during the development of a new motor vehicle, thorough and scrupulous checks on the interaction or interference that a flexible hose of a brake has with components to which, in use, it is constrained and/or that are operatively adjacent to it, are carried out for safety reasons.

In fact, in order to avoid obvious risk for the passenger safety, it must be guaranteed that, in the presence of any operating manoeuvre that can be performed with the motor vehicle, the brake's flexible hose is not damaged by the components to which it is constrained and/or that are adjacent to it and that, at the same time, the same flexible hose does not prevent the normal operation of the components to which it is constrained and/or that are adjacent to it.

For a better understanding of the description that follows, reference should be made to Figures 1, 2 and 3. In particular, Figure 1 shows a flexible hose 1 of a motor vehicle brake constrained in a known manner at a point A of the body 2 of the motor vehicle, Figure 2 shows the flexible hose 1 constrained in a known manner at a point B of a shock absorber 3 of the motor vehicle, and Figure 3 shows a flexible hose 1 constrained in a known manner at a point C of a strut 4 of a wheel of the motor vehicle, close to the brake shoes 5 of the wheel's brake.

Nowadays, techniques are known of for checking the interference of the flexible hose 1 with the components to which, in use, it is constrained and/or that are operatively adjacent to it, which contemplate the construction and utilization of physical prototypes of the constraining and/or adjacent components, or rather, in particular, of the shock absorber 3, strut 4, brake shoes 5 etc. These prototypes are generally made with the use of specially made dies.

Therefore, according to the known techniques, the checks are carried out on a physical mock-up, made with the various physical prototypes and the flexible hose 1, representing the suspension unit formed by the flexible hose 1 and the constraining and/or adjacent components.

The carrying out of the checks on the physical mock-up is subject to the physical construction of the components involved. In fact, these checks can only be carried out after the physical prototypes of the components have been made and, therefore, only at an advanced stage in the development process of the new motor vehicle.

Techniques are also known of for checking the interference of the flexible hose 1 with the constraining and/or adjacent components based on modelling the suspension unit according to the Finite Element Method (FEM).

Regarding known techniques based on the physical mock-up of the suspension unit, the Applicant has noted that whenever the checks show the need, for safety reasons, to modify one or more components of the system, it is necessary to modify the designs of one or more components, make one or more dies again, make one or more new physical prototypes, assemble the physical mock-up again and again carry out all of the checks, with consequent increases in development costs and times for the new motor vehicle, also and above all in consideration of the fact of being in an advanced stage of the development process.

Furthermore, the Applicant has also noted that to carry out the checks on a physical mock-up entails performing operationally complex measurements due to the complex structure of the physical mock-up itself, which faithfully reproduces the actual structure of the suspension unit.

Instead, with regard to known techniques based on modelling the suspension unit according to the Finite Element Method, the Applicant has noted that these techniques do not provide a true characterization of the interaction between the flexible hose 1 and the constraints *A*, *B* and *C*.

Therefore, the object of the present invention is that of providing a methodology for checking the interaction or interference of a flexible hose with the components to which, in use, it is constrained and/or that are operatively adjacent to it, which does not suffer from the above-mentioned drawbacks of known art.

This object is achieved by the present invention in so far as it concerns a computer-aided method for checking the interaction or interference of a flexible body with bodies to which, in use, it is constrained and/or that are operatively adjacent to it, as defined in the enclosed claims.

For a better understanding of the present invention, a preferred embodiment is now described, purely by way of a non-limitative example, with reference to the enclosed drawings (not all in scale), where:

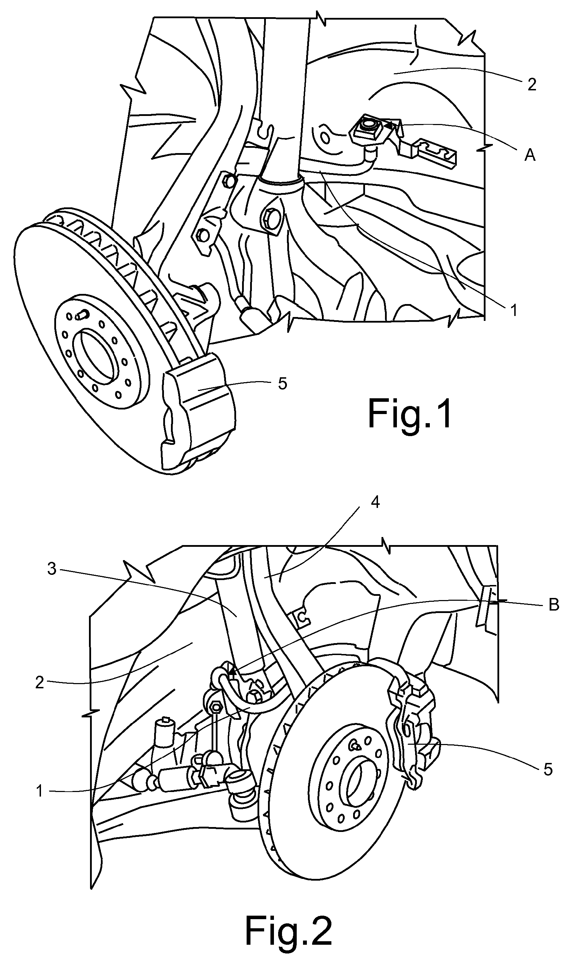

- Figure 1 shows a flexible hose of a brake of a motor vehicle constrained in a known manner to the body of the motor vehicle,
- Figure 2 shows the flexible hose of Figure 1 constrained in a known manner to a shock absorber of the motor vehicle,

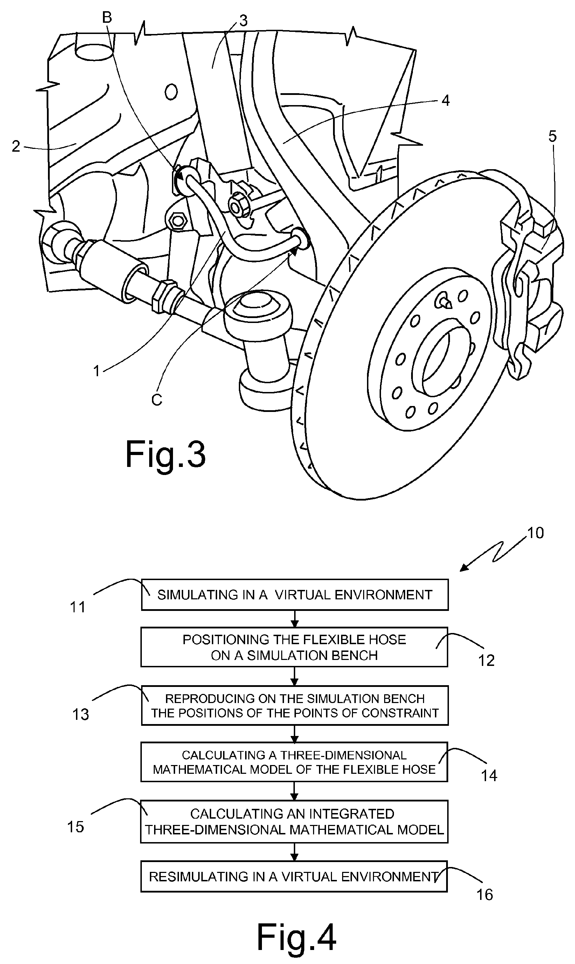

- Figure 3 shows the flexible hose of Figures 1 and 2 constrained in a known manner to a strut of a wheel of the motor vehicle,
- Figure 4 shows a flowchart of the operations implemented by the method for checking the interaction or interference of a flexible hose with components to which it is constrained and/or that are operatively adjacent, according to the present invention,

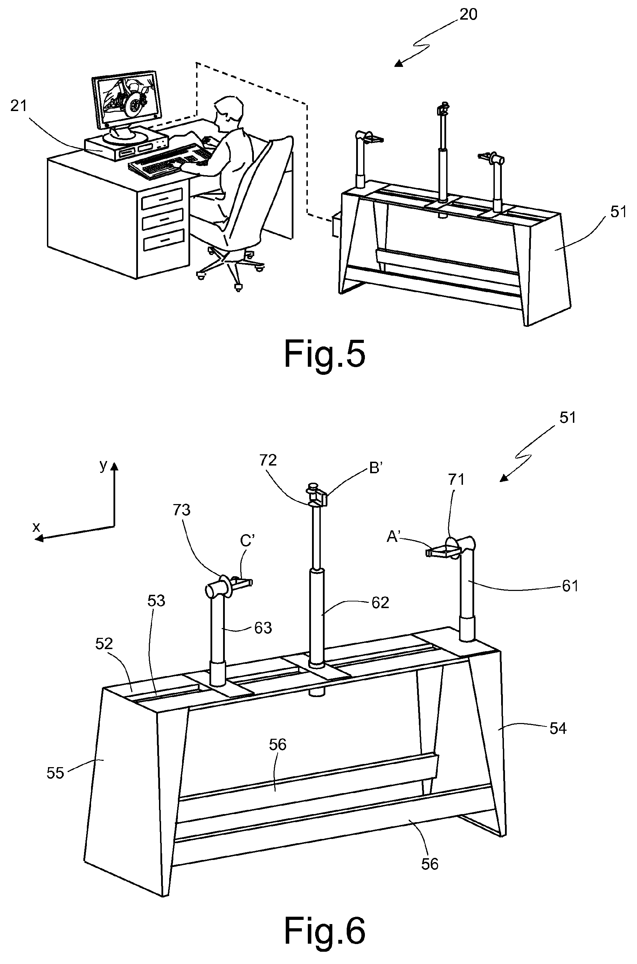

- Figure 5 shows a computer-aided system for checking the interaction or interference of a flexible hose with components to which it is constrained and/or that are operatively adjacent, according to the present invention,
- Figure 6 shows a simulation bench forming part of the system in Figure 5,

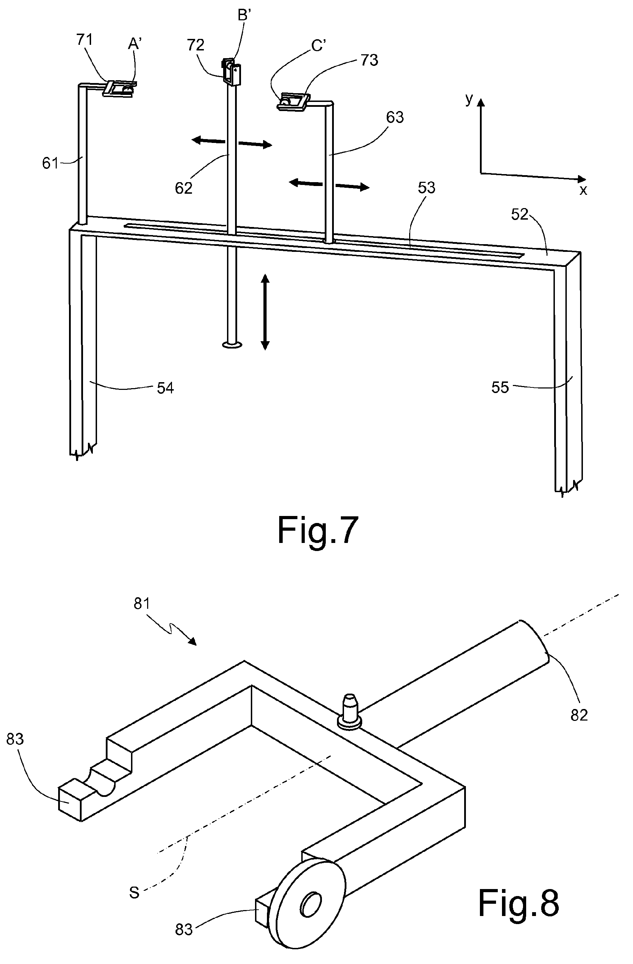

- Figure 7 shows a part of the simulation bench in Figure 6 in greater detail,
- Figure 8 shows a first component of the simulation bench in Figure 6 in greater detail,

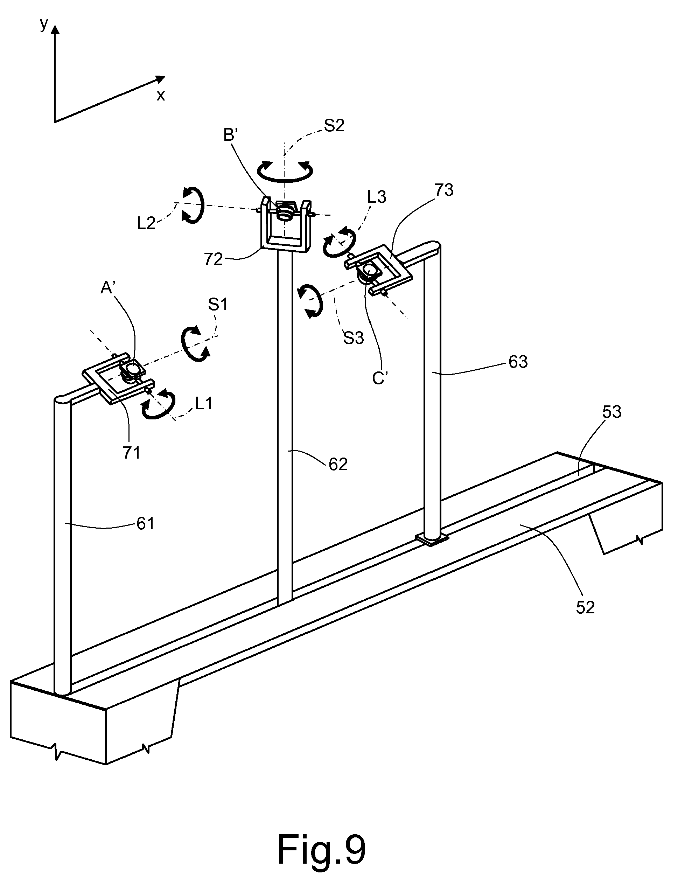

- Figure 9 shows a part of the part of the simulation bench in Figure 7 in greater detail,

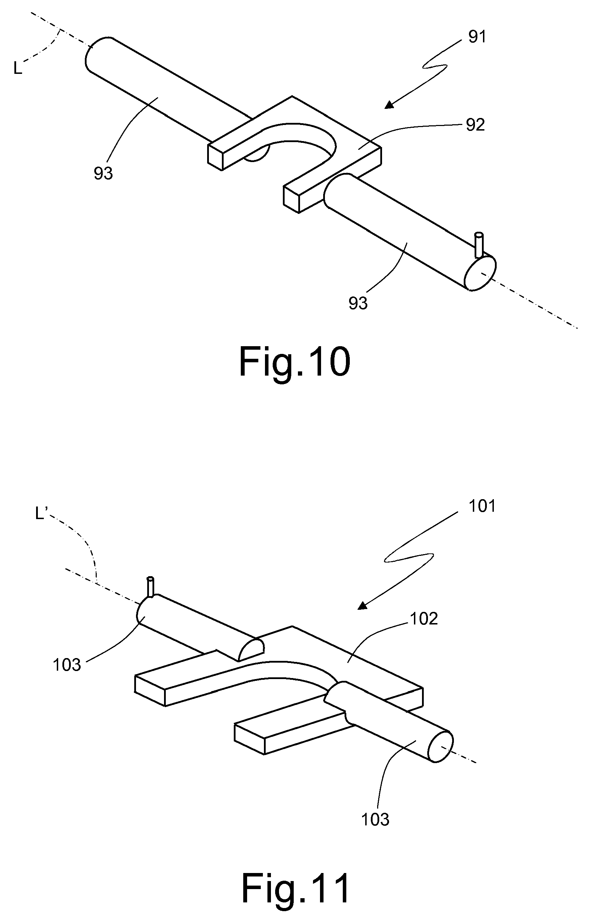

- Figure 10 shows a second component of the simulation bench in Figure 6 in greater detail, and
- Figure 11 shows a third component of the simulation bench in Figure 6 in greater detail.

The following description is provided to allow an expert in the field to make and use the invention. Various modifications to the embodiments presented shall be immediately obvious to an expert and the generic principles disclosed herein could be applied to other embodiments and applications, without however leaving the scope of protection of the present invention as defined in the appended claims.

Therefore, the present invention should not be intended as limited to just the embodiments described and shown herein, but be given the broadest scope of protection consistent with the principles and characteristics presented herein and defined in the enclosed claims.

In particular, in the following, for descriptive simplicity and without loss of generality, the computer-aided method for checking the interaction or interference of a flexible body with bodies to which, in use, it is constrained and/or that are operatively adjacent to it according to the present invention is described with explicit reference to the suspension unit shown in the previously mentioned and described Figures 1, 2 and 3, in which the flexible hose 1 is constrained at point A of the body 2, point B of the shock absorber 3 and point C of the strut 4 of the motor vehicle's wheel, close to the brake shoes 5 of the wheel's brake.

In addition, the present invention is implemented by means of a software program that can be loaded into the memory of a computer and is capable of implementing the computer-aided method, described further on, for checking the interaction or interference of a flexible body with bodies to which, in use, it is constrained and/or that are operatively adjacent to it.

According to the present invention, the computer-aided methodology for checking the interaction or interference of a flexible body with bodies to which, in use, it is constrained and/or that are operatively adjacent to it, is based on a virtual-real mixed simulation.

In particular, the virtual simulation is based on the exploitation of Computer Aided Design (CAD), thanks to which it is possible to create three-dimensional models of the constraining and/or adjacent components involved in the checks; in particular, with reference to Figures 1, 2 and 3, the body 2, the shock absorber 3, the strut 4 and the brake shoes 5. Instead, the real simulation is based on the utilization of a simulation bench, thanks to which the movements of the flexible hose 1 are simulated.

In detail, according to the present invention, the movements of the components constraining and/or adjacent to the flexible hose 1 are estimated through the use of a calculation model that simulates the movements of the corresponding three-dimensional models, based on the operating manoeuvres that can be made with the motor vehicle, in a virtual environment, i.e. through the use of a computer. From the virtual simulation of the movements of the body 2, the shock absorber 3, the strut 4 and the brake shoes 5, it is also possible to obtain the movements of, and hence the positions taken by, the constraints of the flexible hose 1, i.e. the positions taken by point *A* of the body 2, by point *B* of the shock absorber 3 and by point *C* of the strut 4.

In addition, the simulation bench, as shall be described in detail further on, comprises constraints that are mock-ups of constraints *A*, *B* and *C*, and which are able to assume all the respective positions of constraints *A*, *B* and *C* calculated in the virtual simulation. The flexible hose 1 is then mounted on the simulation bench where the constraints are imposed on it according to the calculated positions. The shape taken by the flexible hose 1 as the positions of the constraints *A*, *B* and *C* changes is then detected by means of a tracer point and reproduced in the CAD environment.

Lastly, checking of the interaction or interference of the flexible hose 1 with the body 2, the shock absorber 3, the strut 4 and the brake shoes 5 is carried out again by means of a simulation in a virtual environment, i.e. based on the use of a computer, of the movements of the three-dimensional models and the shapes of flexible hose 1 reproduced in the CAD environment according to the operating manoeuvres that can be made with the motor vehicle.

Going into greater detail of the present invention, Figure 4 shows a flowchart of the operations implemented by the method 10 according to the present invention.

In particular, the method 10 comprises the following phases:
- simulating in a virtual environment (block 11) motor vehicle's operating conditions by means of a computer to determine the positions of the constraints *A*, *B* and *C* in the aforesaid operating conditions, on the basis of a first three-dimensional mathematical model of the constraining and/or adjacent components 2, 3, 4 and 5,
- positioning the flexible hose on a simulation bench (block 12) designed to reproduce the positions of the constraints *A*, *B* and *C* in a real environment,
- reproducing on the simulation bench the positions of the points of constraint (block 13) determined during the simulation in the virtual environment (block 11) and determining the corresponding spatial configurations of the flexible hose 1,
- calculating a three-dimensional mathematical model of the flexible hose (block 14) based on the determined spatial configurations of the flexible hose 1,
- calculating an integrated three-dimensional mathematical model (block 15) based on the first and second three-dimensional mathematical models, and
- resimulating in a virtual environment (block 16) the motor vehicle's operating conditions by means of said computer and on the basis of said integrated three-dimensional mathematical model, to check for any interference of the flexible hose 1 with the constraining 2, 3 and 4 and/or adjacent 5 components situated close by in the motor vehicle's operating conditions.

In addition, a computer-aided system 20 for checking the interaction or interference of the flexible hose 1 with the components to which, in use, it is constrained and/or that are operatively adjacent to it 2, 3, 4 and 5 and that is suitable for implementing the method 10 is shown in Figure 5.

In particular, the system 20 comprises:
- a computer 21 programmed to implement the phase of simulating in a virtual environment (block 11), the phase of calculating a three-dimensional mathematical model of the flexible hose 1 (block 14), the phase of calculating an integrated three-dimensional mathematical model (block 15) and the phase of resimulating in virtual environment (block 16), and
- a simulation bench 51 designed to provide points of constraint for the flexible body 1.

In detail, the phase of simulating in a virtual environment (block 11) comprises formulating and defining, within the CAD environment, the mathematics of each constraining and/or adjacent component, or rather of the body 2, the shock absorber 3, the strut 4 and the brake shoes 5, thereby creating a corresponding three-dimensional model in the CAD environment for each component and, in general, a three-dimensional mathematical model of the constraining and/or adjacent components.

In addition, the phase of simulating in a virtual environment (block 11) comprises finding the coordinates of characteristic points of the overall system formed by the constraining and/or adjacent components. These characteristic points include the constraints of the flexible hose 1, i.e. the constraints *A*, *B* and *C*.

Expediently, the phase of simulating in a virtual environment (block 11) also comprises providing an "overall system scheme" document in which the coordinates of the characteristic points are specified and a layout/drawing on which these characteristic points are identified.

In addition, the phase of simulating in a virtual environment (block 11) comprises, in general, virtually simulating, or rather simulating by use of the computer 21, the movements of the constraining and/or adjacent components 2, 3, 4 and 5 based on the operating manoeuvres that can be made with the motor vehicle on the basis of the three-dimensional mathematical model of said components 2, 3, 4 and 5, and, in particular, calculating the positions assumed by the characteristic points based on these operating manoeuvres.

Expediently, the virtual simulation is based on the "overall system scheme" document.

In addition, the phase of simulating in a virtual environment (block 11) can expediently include providing a table of the results in which the coordinates of the characteristic points based on the simulated operating manoeuvres are listed and a trace in electronic form for setting up the movements of the constraining and/or adjacent components 2, 3, 4 and 5 in a virtual environment.

Then, the phase of positioning the flexible hose on the simulation bench (block 12) comprises positioning the flexible hose 1 on the simulation bench 51, which is designed to reproduce the positions of the points of constraint *A*, *B* and *C* of the flexible hose 1 in a real environment.

In general, before proceeding with the description of the method 10 and, in particular, before providing further details on the phase of positioning the flexible hose on the simulation bench (block 12), the previously introduced simulation bench 51, on which the phase of reproducing on the simulation bench the positions of the points of constraint *A*, *B* and *C* (block 13) is based, shall be described in detail.

In particular, Figure 6 shows the simulation bench 51 according to the present invention.

In detail, as shown in Figure 6, the simulation bench 51 comprises an upper part 52 having a substantially rectangular shape in plan with a main extension parallel to a first direction *x*. The upper part 52 is fitted with tracks 53, also having the main extension parallel to the first direction *x*, and suitable for allowing mobile elements to run parallel to the first direction *x*. On the simulation bench 51, the upper part 52 is supported by a first 54 and a second supporting foot 55, both having their main extension parallel to a second direction *y* perpendicular to the first direction *x*.

Expediently, as shown in Figure 6, the simulation bench 51 can also comprise two or more side brackets 56, having a substantially rectangular shape in plan with the main extension parallel to the first direction *x* and connected to both the first 54 and the second supporting foot 55 in order to improve the stability and rigidity of the simulation bench 51.

In addition, the simulation bench 51 comprises a first 61, a second 62 and a third arm 63 having their main extension parallel to the second direction *y*.

The translations that can be performed by the arms 61, 62 and 63 are schematically indicated by the arrows in Figure 7.

In detail, as shown in Figure 7, a first end of the first arm 61 is connected in a fixed manner to the upper part 52 in correspondence to the first supporting foot 54, a first end of the second arm 62 is connected to the tracks 53 so that the second arm 62 can run on the tracks 53 parallel to the first direction x, and a first end of the third arm 63 is connected to the tracks 53 so that the third arm 63 can also run on the tracks 53 parallel to the first direction x.

Furthermore, always as shown in Figure 7, the second arm 62 is connected to the tracks 53 so that it can also run parallel to the second direction *y*.

Expediently, the second arm 62 can consist of a telescopic arm, i.e. formed by two or more tubular elements that slide one inside the other, parallel to the second direction *y*.

In addition, as shown in Figures 6 and 7, the simulation bench 51 also comprises a first 71, a second 72 and a third fork 73. In particular, Figure 8 shows an example of embodiment 81 of the forks 71, 72 and 73 having a Y-shape defining an axis of symmetry indicated by *S*, and provided with a first end 82 and a pair of second ends 83 symmetrical with respect to the axis of symmetry *S*.

As shown in Figures 6 and 7, the first end of the first fork 71 is connected to a second end of the first arm 61, the first end of the second fork 72 is connected to a second end of the second arm 62, and the first end of the third fork 73 is connected to a second end of the third arm 63.

In particular, the respective axes of symmetry of the first 71 and the third fork 73 extend parallel to the first direction *x*, while the axis of symmetry of the second fork 72 extends parallel to the second direction *y*.

The rotations that can be performed by the forks 71, 72 and 73 are schematically indicated by the arrows in Figure 9.

In detail, as shown in Figure 9, the first fork 71 is connected to the second end of the first arm 61 so that it can angularly turn with respect to its axis of symmetry, indicated by *S1,* the second fork 72 is connected to the second end of the second arm 62 so that it can angularly turn with respect to its axis of symmetry, indicated by *S2,* and the third fork 73 is connected to the second end of the third arm 63 so that it can angularly turn with respect to its axis of symmetry, indicated by *S3.*

In addition, as shown in Figures 6, 7 and 9, the simulation bench 51 also comprises a first fastener device *A'* connected to the pair of second ends of the first fork 71, a second fastener device *B'* connected to the pair of second ends of the second fork 72, and a third fastener device *C'* connected to the pair of second ends of the third fork 73.

In particular, the fastener devices *A'*, *B'* and *C'* can expediently comprise a bush, as shown in Figure 10 and Figure 11.

In detail, Figure 10 shows an example of embodiment 91 of the first *A'* and the third fastener device *C'* formed by a bush 92 between two arm portions 93 defining a longitudinal axis indicated by *L,* while Figure 11, instead, shows an example of embodiment 101 of the second fastener device *B'* formed by a bush 102 between two arm portions 103 defining a longitudinal axis indicated by *L'*.

Alternatively, the first *A'* and the third fastener device *C'* could comprise a chuck.

The bushes and/or chucks of the fastener devices *A'*, *B'* and *C'* are designed to lock the flexible hose 1.

In addition, the rotations that can be performed by the fastener devices *A'*, *B'* and *C'* are also schematically indicated by the arrows in Figure 9.

In detail, the first fastener device *A'* is connected to the first fork 71 so that it can angularly turn with respect to its own longitudinal axis *L1,* which is perpendicular to the axis of symmetry *S1* of the first fork 71. The second fastener device *B'* is connected to the second fork 72 so that it can angularly turn with respect to its own longitudinal axis *L2,* which is perpendicular to the axis of symmetry *S2* of the second fork 72. The third fastener device *C'* is connected to the third fork 73 so that it can angularly turn with respect to its own longitudinal axis *L3,* which is perpendicular to the axis of symmetry *S3* of the third fork 73.

The first *A'*, second *B'* and third fastener device *C'* are mock-ups of constraint *A*, constraint *B* and constraint *C* respectively and, thanks to the structure of the simulation bench 51 just described, are designed to assume all of the respective positions of the constraints *A, B* and *C*.

Furthermore, the first fastener device *A'* is such as to allow the flexible hose 1 to turn around its own axis of symmetry to allow the simulation of any torsional pre-tensioning that might occur during the mounting of the flexible hose 1 on the motor vehicle.

The simulation bench 51 can have manual adjustment, or rather the positions and movements of the arms 62 and 63, the forks 71, 72 and 73, and the fastener devices *A'*, *B'* and *C'* are set by a user, or be automatic, i.e. piloted by the computer 21, as indicated by the dashed arrow that connects the computer 21 to the simulation bench 51 in Figure 5.

In the second case, the automatic simulation bench 51 also comprises:
- at least one actuator (not shown) connected to the second arm 62 designed to make it run on the tracks 53 parallel to the first direction *x*,
- at least one actuator (not shown) connected to the second arm 62 designed to make it move parallel to the second direction *y*,
- at least one actuator (not shown) connected to the third arm 63 designed to make it run on the tracks 53 parallel to the first direction *x*,
- at least one actuator (not shown) connected to the first fork 71 designed to make it turn around its own axis of symmetry *S1,* both clockwise and anticlockwise,
- at least one actuator (not shown) connected to the second fork 72 designed to make it turn around its own axis of symmetry *S2*, both clockwise and anticlockwise,
- at least one actuator (not shown) connected to the third fork 73 designed to make it turn around its own axis of symmetry *S3,* both clockwise and anticlockwise,
- at least one actuator (not shown) connected to the first fastener device *A'* designed to make it turn around its own longitudinal axis *L1,* both clockwise and anticlockwise,
- at least one actuator (not shown) connected to the first fastener device *A'* designed to turn the flexible hose 1 around its own axis of symmetry, both clockwise and anticlockwise,
- at least one actuator (not shown) connected to the second fastener device *B'* designed to make it turn around its own longitudinal axis *L2*, both clockwise and anticlockwise,
- at least one actuator (not shown) connected to the third fastener device *C'* designed to make it turn around its own longitudinal axis *L3,* both clockwise and anticlockwise,
- position sensors (not shown) designed to detect the positions of the arms 62 and 63, the forks 71, 72 and 73, and the fastener devices *A'*, *B'* and *C'*,
- a servomotor (not shown) designed to drive the actuators and so guide the movements of the arms 62 and 63, the forks 71, 72 and 73, and the fastener devices *A*', *B'* and *C*', and
- a hardware/software interface (not shown) designed to connect the simulation bench 51 to the computer 21, which, on the basis of the coordinates of the constraints *A*, *B* and *C*, calculates the corresponding positions of the arms 62 and 63, the forks 71, 72 and 73, and the fastener devices *A*', *B'* and *C'*, and, via the hardware/software interface, controls the servomotor, the actuators and the position sensors in order to move the arms 62 and 63, the forks 71, 72 and 73, and the fastener devices *A*', *B*' according to the calculated positions and make them assume the calculated positions.

According to what has been described so far, the simulation bench 51 guarantees:
- correct positioning of the arms 62 and 63, the forks 71, 72 and 73, and the fastener devices *A*', *B'* and *C*' on the basis of the coordinates of the constraints *A*, *B* and *C*,
- correct relative inclination of the forks 71, 72 and 73 and the fastener devices *A'*, *B'* and *C'* on the basis of the coordinates of the constraints *A*, *B* and *C*,
- correct positioning and locking of the flexible hose 1 on the fastener devices *A'*, *B'* and *C'* on the basis of the coordinates of the constraints *A*, *B* and *C*,
- absence of interference with components of the simulation bench 51 that could prevent the flexible hose 1 from assuming some positions,
- control of the positions assumed by the flexible hose 1 and of the automatic movements, succeeding in avoiding any forcing due to uncoordinated movements during the translations, and
- a margin of tolerance in the relative positioning of the arms 62 and 63, the forks 71, 72 and 73 and the fastener devices *A'*, *B'* and *C'*.

Expediently, the simulation bench 51 is also equipped with wheels and locking devices connected to the supporting feet 54 and 55 that allow it to be both moved and blocked.

At this point, after having described the simulation bench 51 in detail, it is possible to continue with the description of the method 10, providing further details on the phase of positioning the flexible hose on the simulation bench (block 12).

In particular, the phase of positioning the flexible hose on the simulation bench (block 12) comprises:
- mounting the flexible hose 1 on the physical simulation bench 51, i.e. clamping the flexible hose 1 to the bushes and/or chucks of the fastener devices *A'*, *B'* and *C'*.

Then, the phase of reproducing on the simulation bench the positions of the points of constraint (block 13) comprises:
- calculating the corresponding positions of the arms 62 and 63, the forks 71, 72 and 73, and the fastener devices *A'*, *B'* and *C'* on the basis of the positions assumed by the constraints *A, B* and *C*, based on the operating manoeuvres and calculated during the phase of simulating in a virtual environment (block 11), and
- making the arms 62 and 63, the forks 71, 72 and 73, and the fastener devices *A'*, *B'* and *C'* assume the calculated positions corresponding to the positions assumed by the constraints *A*, *B* and *C* based on the operating manoeuvres of the motor vehicle.

If the simulation bench 51 is automatic, then the phase of reproducing on the simulation bench the positions of the points of constraint (block 13) is also based on the use of the computer 21, which
- on the basis of the positions assumed by the constraints *A*, *B* and *C*, based on the operating manoeuvres and calculated during the phase of simulation in a virtual environment (block 11), calculates the corresponding positions of the arms 62 and 63, the forks 71, 72 and 73, and the fastener devices *A', B'* and *C'*, and
- for each operating manoeuvre, controls the servomotor, the actuators and the position sensors of the simulation bench 51 via the hardware/software interface in order to move the arms 62 and 63, the forks 71, 72 and 73, and the fastener devices *A'*, *B'* and *C'* according to the corresponding calculated positions and make them assume the corresponding calculated positions.

In addition, the phase of reproducing on the simulation bench the positions of the points of constraint (block 13) also comprises finding the corresponding position assumed by the flexible hose 1 for each operating manoeuvre through the use of a tracer point, for example, a Vectoron device. Alternatively, having specific instruments available, the respective full geometry of the flexible hose 1 is measured for each operating manoeuvre through the use of said specific instruments.

Expediently, calculation of the positions of the arms 62 and 63, the forks 71, 72 and 73, and the fastener devices *A'*, *B'* and *C'*, corresponding to the positions assumed by the constraints *A*, *B* and *C* based on the operating manoeuvres, can be based on the table of results provided by the phase of simulating in a virtual environment (block 11).

Then, the phase of calculating a three-dimensional mathematical model of the flexible hose (block 14) comprises, for each operating manoeuvre, initially reconstructing the axis of the flexible hose 1 in the CAD environment on the basis of the respective position of the flexible hose 1 found via the tracer point, and then the full geometry of the flexible hose 1 on the basis of this axis.

Alternatively, having directly measured the full geometry of the flexible hose 1 during the phase of reproducing on the simulation bench the positions of the points of constraint (block 13), the phase of calculating a three-dimensional mathematical model of the flexible hose (block 14) comprises, for each operating manoeuvre, reconstructing the corresponding, measured, full geometry of the flexible hose 1 in the CAD environment.

Then, the phase of calculating an integrated three-dimensional mathematical model (block 15) comprises calculating an integrated three-dimensional mathematical model of the entire suspension unit, by means of the computer 21 and on the basis of the three-dimensional mathematical model of the constraining and/or adjacent components 2, 3, 4 and 5 and the three-dimensional mathematical model of the flexible hose 1.

Lastly, the phase of resimulating in a virtual environment (block 16) consists, in general, in simulating the operating manoeuvres of the motor vehicle in a virtual environment, or rather by means of the computer 21 and on the basis of said integrated three-dimensional mathematical model, to check for any interference between the flexible hose 1 and the constraining and/or adjacent components 2, 3, 4 and 5.

In particular, the phase of resimulation in a virtual environment (block 16) comprises, for each operating manoeuvre, simulating in a virtual environment, or rather simulating through the use of the computer 21:
- the corresponding movements of the three-dimensional models of the constraining and/or adjacent components, and
- the interaction of said three-dimensional models with the respective full geometry of the flexible hose 1 reconstructed in the CAD environment.

Accordingly, the phase of resimulating in a virtual environment (block 16) also comprises detecting the following for each operating manoeuvre:
- any damage and/or obstructions to the flexible hose 1 caused by the components to which it is constrained 2, 3, 4 and/or that are adjacent to it 5, and
- any malfunctioning of the constraining and/or adjacent components 2, 3, 4 and 5 caused by the flexible hose 1.

Expediently, the phase of resimulating in a virtual environment (block 16) can be based on the trace in electronic form provided by the phase of simulating in a virtual environment (block 11).

From the preceding description, the advantages can be immediately understood.

In particular, it is important to note that the computer-aided method for checking the interaction or interference of a flexible hose with components to which, in use, it is constrained and/or that are operatively adjacent to it according to the present invention allows possible damage to the flexible hose and/or the constraining/adjacent components to be revealed without the need to wait for the physical construction of the components and opportune changes to be made by acting just on the CAD parts, with consequent time and cost savings. Furthermore, all this brings a decided improvement in product quality. In fact, by acting on the design in the setting-up phase, it is possible to make changes that would not be feasible in an advanced phase.

Furthermore, the method according to the present invention does not entail carrying out measurements that are operationally complex.

Finally, it is clear that various modifications can be made to the present invention, all falling within the scope of protection of the invention defined in the enclosed claims.

## Claims

1. Computer-aided method (10) for checking interaction or interference of a flexible body (1) with other bodies (2, 3, 4, 5) situated, in use, close by to the flexible body (1) and arranged, together with the flexible body (1), on a means, the flexible body (1) presenting, in use, certain points of constraint (A, B, C), the method (10) being **characterized in that** it comprises the following phases:
a) simulating in a virtual environment (11), by means of a computer (21), operating conditions of the means on which the flexible body (1) is arranged to determine positions of the points of constraint (A, B, C) of the flexible body (1) in said operating conditions, on the basis of a first three-dimensional mathematical model of the bodies (2, 3, 4, 5) situated, in use, close by to the flexible body (1);
b) positioning (12) the flexible body (1) on a simulation bench (51) designed to physically reproduce the positions of the points of constraint (A, B, C) of the flexible body (1) in a real environment;
c) reproducing (13) on the simulation bench (51) the positions of the points of constraint (A, B, C) determined during the simulation in the virtual environment and determining corresponding spatial configurations of the flexible body (1);
d) calculating by means of said computer a second three-dimensional mathematical model (14) of the flexible body (1) on the basis of the determined spatial configurations of the flexible body (1);
e) calculating by means of said computer an integrated three-dimensional mathematical model (15) on the basis of the first and second three-dimensional mathematical models; and
f) resimulating (16) in a virtual environment, by means of said computer (21) and on the basis of said integrated three-dimensional mathematical model, operating conditions of the means on which the flexible body (1) is arranged to check any interference of the flexible body (1) with the other bodies (2, 3, 4, 5) situated close by to it in the operating conditions of the means on which it is arranged.

2. Method according to claim 1, wherein the phase a) (11) comprises:
• defining in a Computer Aided Design (CAD) environment mathematics of the bodies (2, 3, 4, 5) situated, in use, close by to the flexible body (1); and
• calculating the first three-dimensional mathematical model on the basis of said mathematics of the bodies (2, 3, 4, 5) situated, in use, close by to the flexible body (1).

3. Method according to claim 2, wherein the phase a) (11) further comprises:
• identifying characteristic points of the bodies (2, 3, 4, 5) situated, in use, close by to the flexible body (1) on the basis of said defined mathematics, the characteristic points including the points of constraint (A, B, C); and
• simulating in a virtual environment, by means of said computer (21), operating conditions of the means on which the flexible body (1) is arranged to determine positions of the characteristic points in said operating conditions, on the basis of the first three-dimensional mathematical model of the bodies (2, 3, 4, 5).

4. Method according to any preceding claim, wherein the phase d) (14) comprises:
• representing the determined spatial configurations of the flexible body (1) in a Computer Aided Design (CAD) environment; and
• calculating the second three-dimensional mathematical model on the basis of the spatial configurations of the flexible body (1) represented in the Computer Aided Design (CAD) environment.

5. Method according to any preceding claim, further comprising:
• detecting any damage and/or obstruction of the flexible body (1) caused by the bodies (2, 3, 4, 5) situated, in use, close by to it, on the basis of the operating conditions of the means resimulated in the virtual environment; and
• detecting any malfunction of the bodies (2, 3, 4, 5) situated, in use, close by to the flexible body (1) and caused by the flexible body (1), on the basis of the operating conditions of the means resimulated in the virtual environment.

6. Method according to any preceding claim, wherein the phase c) (13) comprises:
• determining the spatial configurations of the flexible body (1) by means of a tracer point device.

7. Method according to any preceding claim, wherein the means consists of a vehicle and the flexible body (1) consists of a flexible hose (1) flowed through, in use, by an operating fluid of said vehicle.

8. Method according to claim 7, wherein the flexible hose (1) is a flexible hose of a braking system of the vehicle, the flexible hose being, in use, flowed through by a fluid that operates braking members.

9. Computer-aided system (20) for checking interaction/interference of a flexible body (1) with other bodies (2, 3, 4, 5) situated, in use, close by to the flexible body (1) and arranged, together with the flexible body (1), on a means, the flexible body (1) presenting, in use, certain points of constraint (A, B, C), the system (21) being **characterized in that** it comprises:
• a computer (21) programmed to implement the phases a) and d) to f) according to claim 1; and
• a simulation bench (51) designed to provide points of constraint (A', B', C') for the flexible body (1);
said simulation bench (51) being provided with means of adjustment for implementing the positions of the points of constraint (A, B, C) of the flexible body (1) calculated under phase a) to determine corresponding spatial configurations of said flexible body (1).

10. System according to claim 9, wherein said means of adjustment are automatic means of adjustment of position of the points of constraint (A', B', C') on the basis of instructions supplied by said computer (21).

11. Software program loadable in a memory of an electronic processor (21) and implementing, when run, the phases a) and d) to f) according to claim 1.

## Patentansprüche

1. Computergestütztes Verfahren (10) zur Prüfung einer Interaktion oder Interferenz eines flexiblen Körpers (1) mit anderen Körpern (2, 3, 4, 5), die sich, im Einsatz, nahe des flexiblen Körpers (1) befinden und, zusammen mit dem flexiblen Körper (1), an einem Mittel angeordnet sind, wobei der flexible Körper (1), im Einsatz, bestimmte Beschränkungspunkte (A, B, C) darstellt, wobei das Verfahren (10) **dadurch gekennzeichnet ist, dass** es die folgenden Phasen umfasst:
a) Simulieren, in einer virtuellen Umgebung (11), mit Hilfe eines Computers (21), von Betriebsbedingungen des Mittels, an welchem der flexible Körper (1) angeordnet ist, zum Bestimmen von Positionen der Beschränkungspunkte (A, B, C) des flexiblen Körpers (1) bei den Betriebsbedingungen auf der Grundlage eines ersten dreidimensionalen mathematischen Modells der Körper (2, 3, 4, 5), die sich, im Einsatz, nahe des flexiblen Körpers (1) befinden;
b) Positionieren (12) des flexiblen Körpers (1) auf einem Simulationsstand (51), der ausgelegt ist zum physischen Reproduzieren der Positionen der Beschränkungspunkte (A, B, C) des flexiblen Körpers (1) in einer realen Umgebung;
c) Reproduzieren (13), auf dem Simulationsstand (51), der Positionen der Beschränkungspunkte (A, B, C), die während der Simulation in der virtuellen Umgebung bestimmt wurden, und Bestimmen entsprechender räumlicher Konfigurationen des flexiblen Körpers (1);
d) Berechnen, mit Hilfe des Computers, eines zweiten dreidimensionalen mathematischen Modells (14) des flexiblen Körpers (1) auf der Grundlage der bestimmten räumlichen Konfigurationen des flexiblen Körpers (1);
e) Berechnen, mit Hilfe des Computers, eines integrierten dreidimensionalen mathematischen Modells (15) auf der Grundlage des ersten und zweiten dreidimensionalen mathematischen Modells; und
f) erneutes Simulieren (16), in einer virtuellen Umgebung, mit Hilfe des Computers (21) und auf der Grundlage des integrierten dreidimensionalen mathematischen Modells, von Betriebsbedingungen des Mittels, an welchem der flexible Körper (1) angeordnet ist, zum Prüfen jeglicher Interferenz des flexiblen Körpers (1) mit den anderen Körpern (2, 3, 4, 5), die sich nahe dazu befinden, bei den Betriebsbedingungen des Mittels, an welchem er angeordnet ist.

2. Verfahren nach Anspruch 1, wobei die Phase a) (11) Folgendes umfasst:
• Definieren, in einer Computer-Aided-Design (CAD) -Umgebung, einer Mathematik der Körper (2, 3, 4, 5), die sich, im Einsatz, nahe des flexiblen Körpers (1) befinden; und
• Berechnen des ersten dreidimensionalen mathematischen Modells auf der Grundlage der Mathematik der Körper (2, 3, 4, 5), die sich, im Einsatz, nahe des flexiblen Körpers (1) befinden.

3. Verfahren nach Anspruch 2, wobei die Phase a) (11) ferner Folgendes umfasst:
• Identifizieren charakteristischer Punkte der Körper (2, 3, 4, 5), die sich, im Einsatz, nahe des flexiblen Körpers (1) befinden, auf der Grundlage der definierten Mathematik, wobei die charakteristischen Punkte die Beschränkungspunkte (A, B, C) beinhalten; und
• Simulieren, in einer virtuellen Umgebung, mit Hilfe des Computers (21), von Betriebsbedingungen des Mittels, an welchem der flexible Körper (1) angeordnet ist, zum Bestimmen von Positionen der charakteristischen Punkte bei den Betriebsbedingungen auf der Grundlage des ersten dreidimensionalen mathematischen Modells der Körper (2, 3, 4, 5).

4. Verfahren nach einem der vorhergehenden Ansprüche, wobei die Phase d) (14) Folgendes umfasst:
• Darstellen der bestimmten räumlichen Konfigurationen des flexiblen Körpers (1) in einer Computer-Aided-Design (CAD) -Umgebung; und
• Berechnen des zweiten dreidimensionalen mathematischen Modells auf der Grundlage der räumlichen Konfigurationen des flexiblen Körpers (1) dargestellt in der Computer-Aided-Design (CAD) -Umgebung.

5. Verfahren nach einem der vorhergehenden Ansprüche, welches ferner Folgendes umfasst:
• Erkennen jeglicher Schädigung und/oder Behinderung des flexiblen Körpers (1) verursacht durch die Körper (2, 3, 4, 5), die sich, im Einsatz, nahe diesem befinden, auf der Grundlage der Betriebsbedingungen des Mittels, das in der virtuellen Umgebung erneut simuliert wird; und
• Erkennen jeglicher Fehlfunktion der Körper (2, 3, 4, 5), die sich, im Einsatz, nahe des flexiblen Körpers (1) befinden, die durch den flexiblen Körper (1) verursacht wird, auf der Grundlage der Betriebsbedingungen des Mittels, das in der virtuellen Umgebung erneut simuliert wird.

6. Verfahren nach einem der vorhergehenden Ansprüche, wobei die Phase c) (13) Folgendes umfasst:
• Bestimmen der räumlichen Konfigurationen des flexiblen Körpers (1) mit Hilfe eines Tracer-Punkt-Gerätes.

7. Verfahren nach einem der vorhergehenden Ansprüche, wobei das Mittel aus einem Fahrzeug besteht und der flexible Körper (1) aus einem flexiblen Schlauch (1) besteht, durch welchen, im Einsatz, ein Betriebsfluid des Fahrzeugs fließt.

8. Verfahren nach Anspruch 7, wobei der flexible Schlauch (1) ein flexibler Schlauch eines Bremssystems des Fahrzeugs ist, wobei durch den flexiblen Schlauch, im Einsatz, ein Fluid fließt, das Bremselemente betreibt.

9. Computergestütztes System (20) zur Prüfung einer Interaktion/Interferenz eines flexiblen Körpers (1) mit anderen Körpern (2, 3, 4, 5), die sich, im Einsatz, nahe des flexiblen Körpers (1) befinden und, zusammen mit dem flexiblen Körper (1), an einem Mittel angeordnet sind, wobei der flexible Körper (1), im Einsatz, bestimmte Beschränkungspunkte (A, B, C) darstellt, wobei das System (21) **dadurch gekennzeichnet ist, dass** es Folgendes umfasst:
• einen Computer (21), der programmiert ist zum Implementieren der Phasen a) und d) bis f) nach Anspruch 1; und
• einen Simulationsstand (51), der ausgelegt ist zum Bereitstellen der Beschränkungspunkte (A', B', C') für den flexiblen Körper (1);
wobei der Simulationsstand (51) mit Anpassungsmitteln zum Implementieren der Positionen der Beschränkungspunkte (A, B, C) des flexiblen Körpers (1) versehen ist, die unter Phase a) zum Bestimmen entsprechender räumlicher Konfigurationen des flexiblen Körpers (1) berechnet wurden.

10. System nach Anspruch 9, wobei die Anpassungsmittel automatische Anpassungsmittel der Position der Beschränkungspunkte (A', B', C') auf der Grundlage von Anweisungen, die durch den Computer (21) bereitgestellt werden, sind.

11. Softwareprogramm, das in einen Speicher eines elektronischen Prozessors (21) geladen werden kann und, wenn es ausgeführt wird, die Phasen a) und d) bis f) nach Anspruch 1 implementiert.

## Revendications

1. Procédé assisté par ordinateur (10) et destiné à vérifier l'interaction ou l'interférence d'un corps flexible (1) avec d'autres corps (2, 3, 4, 5) situés, pendant l'utilisation près du corps flexible (1) et placés, avec le corps flexible (1), sur un moyen, le corps flexible (1) présentant, pendant l'utilisation, certains points de contrainte (A, B, C), le procédé (10) étant **caractérisé en ce qu'**il comprend les phases suivantes :
a) la simulation, dans un environnement virtuel (11), à l'aide d'un ordinateur (21), de conditions de fonctionnement du moyen sur lequel le corps flexible (1) est placé, de façon à déterminer les positions des points de contrainte (A, B, C) du corps flexible (1) dans lesdites conditions de fonctionnement, sur la base d'un premier modèle mathématique en trois dimensions des corps (2, 3, 4, 5) situés, pendant l'utilisation, près du corps flexible (1) ;
b) le positionnement (12) du corps flexible (1) sur un banc de simulation (51) conçu pour reproduire physiquement les positions des points de contrainte (A, B, C) du corps flexible (1) dans un environnement réel ;
c) la reproduction (13), sur le banc de simulation (51), des positions des points de contrainte (A, B, C) déterminées pendant la simulation dans l'environnement virtuel, et la détermination des configurations spatiales correspondantes du corps flexible (1) ;
d) le calcul, à l'aide dudit ordinateur, d'un second modèle mathématique en trois dimensions (14) du corps flexible (1) sur la base des configurations spatiales déterminées du corps flexible (1) ;
e) le calcul, à l'aide dudit ordinateur, d'un modèle mathématique en trois dimensions intégré (15) sur la base du premier et du second modèles mathématiques en trois dimensions ; et
f) la re-simulation (16), dans un environnement virtuel, à l'aide dudit ordinateur (21), et sur la base dudit modèle mathématique en trois dimensions intégré, des conditions de fonctionnement du moyen sur lequel le corps flexible (1) est placé, afin de vérifier toute interférence du corps flexible (1) avec d'autres corps (2, 3, 4, 5) situés près de celui-ci dans les conditions de fonctionnement du moyen sur lequel il est placé.

2. Procédé selon la revendication 1, dans lequel la phase a) (11) comprend :
- la définition, dans un environnement de conception assistée par ordinateur (CAO), de la mathématique des corps (2, 3, 4, 5) situés, pendant l'utilisation, près du corps flexible (1) ; et
- le calcul du premier modèle mathématique en trois dimensions sur la base de ladite mathématique des corps (2, 3, 4, 5) situés, pendant l'utilisation, près du corps flexible (1).

3. Procédé selon la revendication 2, dans lequel la phase a) (11) comprend en outre :
- l'identification de points caractéristiques des corps (2, 3, 4, 5) situés, pendant l'utilisation, près du corps flexible (1), sur la base de ladite mathématique définie, les points caractéristiques comprenant les points de contrainte (A, B, C) ; et
- la simulation, dans un environnement virtuel, à l'aide dudit ordinateur (21), des conditions de fonctionnement du moyen sur lequel le corps flexible (1) est placé, de façon à déterminer les positions des points caractéristiques dans lesdites conditions de fonctionnement, sur la base du premier modèle mathématique en trois dimensions des corps (2, 3, 4, 5).

4. Procédé selon l'une quelconque des revendications précédentes, dans lequel la phase d) (14) comprend :
- la représentation des configurations spatiales déterminées du corps flexible (1) dans un environnement de conception assistée par ordinateur (CAO) ; et
- le calcul du second modèle mathématique en trois dimensions sur la base des configurations spatiales du corps flexible (1) représentées dans l'environnement de conception assistée par ordinateur (CAO).

5. Procédé selon l'une quelconque des revendications précédentes, qui comprend en outre :
- la détection de tout dommage et/ou de toute obstruction du corps flexible (1) provoqué(e) par les corps (2, 3, 4, 5) situés, pendant l'utilisation, près de celui-ci, sur la base des conditions de fonctionnement du moyen re-simulées dans l'environnement virtuel ; et
- la détection de tout fonctionnement défectueux des corps (2, 3, 4, 5) situés, pendant l'utilisation, près du corps flexible (1), et provoqué par le corps flexible (1), sur la base des conditions de fonctionnement du moyen re-simulées dans l'environnement virtuel.

6. Procédé selon l'une quelconque des revendications précédentes, dans lequel la phase c) (13) comprend :
- la détermination des configurations spatiales du corps flexible (1) à l'aide d'un dispositif à point de tracé.

7. Procédé selon l'une quelconque des revendications précédentes, dans lequel le moyen se compose d'un véhicule, et le corps flexible (1) se compose d'un conduit flexible (1) traversé, pendant l'utilisation, par un fluide de fonctionnement dudit véhicule.

8. Procédé selon la revendication 7, dans lequel le conduit flexible (1) est un conduit flexible d'un système de freinage du véhicule, le conduit flexible étant, pendant l'utilisation, traversé par un fluide qui actionne les éléments de freinage.

9. Système assisté par ordinateur (20) et destiné à vérifier l'interaction/l'interférence d'un corps flexible (1) avec d'autres corps (2, 3, 4, 5) situés, pendant l'utilisation, près du corps flexible (1), et placés, avec le corps flexible (1), sur un moyen, le corps flexible (1) présentant, pendant l'utilisation, certains points de contrainte (A, B, C), le système (21) étant **caractérisé en ce qu'**il comprend :
- un ordinateur (21) programmé pour mettre en oeuvre les phases a) et d) à f) selon la revendication 1 ; et
- un banc de simulation (51) conçu pour fournir des points de contrainte (A', B', C') pour le corps flexible (1) ;
ledit banc de simulation (51) étant muni d'un moyen de réglage destiné à appliquer les positions des points de contrainte (A, B, C) du corps flexible (1) calculés lors de la phase a) de façon à déterminer les configurations spatiales correspondantes dudit corps flexible (1).

10. Système selon la revendication 9, dans lequel ledit moyen de réglage est un moyen automatique de réglage de la position des points de contrainte (A', B', C') sur la base d'instructions fournies par ledit ordinateur (21).

11. Programme logiciel qui peut être chargé dans une mémoire d'un processeur électronique (21) et qui exécute, lorsqu'il est lancé, les phases a) et d) à f) selon la revendication 1.
